Europäisches Patentamt

European Patent Office

Office européen des brevets

(11) Publication number: **0 382 354**
**A2**

## EUROPEAN PATENT APPLICATION

(21) Application number: **90300526.2**

(22) Date of filing: **18.01.90**

(51) Int. Cl.5: **G06F 3/023, G06K 11/08**

(30) Priority: **10.02.89 US 309839**

(43) Date of publication of application:
**16.08.90 Bulletin 90/33**

(84) Designated Contracting States:
**DE FR GB**

(71) Applicant: **Hewlett-Packard Company**
**3000 Hanover Street**
**Palo Alto California 94304(US)**

(72) Inventor: **Ramachandran, Hariram**
**12 Jalan Tempua**
**Singapore 1129(SG)**

(74) Representative: **Colgan, Stephen James et al**
**CARPMAELS & RANSFORD 43 Bloomsbury**
**Square**
**London WC1A 2RA(GB)**

(54) **Cursor control mechanism.**

(57) A hand-controlled mechanism is described for producing signals to move the position of a cursor in a computer display. The mechanism includes a shaft (12) with an elongated axis and a cylindrical member (10) mounted coaxially around a portion of the shaft (12), the member being both rotatable about and slidable along the elongated axis. The cylindrical member (10), has sets of encoding markings (18,20) directly emplaced thereof, which markings are parallel to and transverse to the elongated axis of the shaft (12). Optical sensing devices (60,62,64,66) are provided and are responsive to the movement of the sets of encoding markings to provide signals indicating both rotational and axial movement of the cylindrical member. Decoder circuits (92) are responsive to those signals to produce additional outputs which may be used to move the position of the display cursor.

**FIG. 1a**

## CURSOR CONTROL MECHANISM

FIELD OF THE INVENTION

This invention relates to apparatus for controlling an alpha-numeric display device and, more particularly, an apparatus for controlling the position of an indicator on the screen of a display device.

BACKGROUND OF THE INVENTION

The mouse is a commonly used input device for computer display terminals, and provides signals to control the position of a cursor on the display face. The mouse is configured as a small, box-like device and is placed on and moved over a flat surface in various directions. As position changing signals are generated by the mouse, they are transmitted to the terminal which causes a corresponding movement of the cursor.

While the mouse is useful for many applications, it requires that one hand be withdrawn from the terminal's keyboard to control its movement. Recently, a new mechanism has been developed which provides directional control signals for a cursor, but allows both of the users hands to remain in contact with the keyboard. In U.S. Patent 4,712,101 to C. F. Culver, this mechanism is shown as comprising a rotatable shaft on which a cylinder has been mounted. The mechanism is constructed as part of or adjacent to a keyboard and is positioned on the user side of the shift bar. In one configuration, it comprises a separate entity which sits immediately in front of the keyboard.

Rotation of the cylinder rotates the shaft; however, the cylinder is also able, simultaneously, to translate longitudinally along the axis of the shaft. One encoder is coupled to the shaft and provides rotary shaft movement signals which control one direction of movement of the cursor. Another encoder is coupled to the cylinder and provides a signal indicative of its longitudinal movement. That signal is employed to control the cursor's movement in a second direction on the display. As a result of this structure, a cursor's position in the display is controllable by the action of one hand both rotating and translating the cylinder while it remains in contact with the keyboard.

Culver employs a variety of encoders to derive his motion signals. In one version, he employs a code wheel rotatable with the shaft and a second encoder wheel which is operated by a cable connected to the cylinder. In another version, the rotary wheel is coupled to the shaft by a gear arrangement while longitudinal movement is sensed by a linear encoder directly coupled to the cylinder. In still another version, Culver suggests the use of a linear resistive strip for longitudinal position sensing.

In U.S. Patent 4,724,715 Culver further describes a number of design modifications to the structures shown in his '101 patent. Those modifications revolve about the use of analogue elements as position sensors rather than the digital encoders shown in his earlier patent.

Despite the acknowledged benefits of Culver's input mechanism, his implementations are expensive and some are difficult to maintain in adjustment when operated by the user.

Accordingly, it is an object of this invention to provide an improved Culver input mechanism.

It is another object of this invention to provide a Culver input mechanism which includes a less expensive and more maintainable movement sensor system.

SUMMARY OF THE INVENTION

A hand controlled mechanism is described for producing signals to move the position of a cursor in a computer display. The mechanism includes a shaft with an elongated axis and a cylindrical member mounted coaxially around a portion of the shaft, the member being both rotatable about and slidable along the elongated axis. The cylindrical member, in contrast to the Culver structures aforedescribed, has sets of encoding markings directly emplaced thereon, which markings are parallel to and transverse to the elongated axis of the shaft. Optical sensing devices are provided and are responsive to the movement of the sets of encoding markings to provide signals indicating both rotational and axial movement of the cylindrical member. Decoder circuits are responsive to those signals to produce additional outputs which may be used to move the position of the display cursor.

DESCRIPTION OF THE DRAWINGS

Fig. 1 is a partial perspective view of one version of the invention.

Fig. 1a is an partial perspective view of the invention when in place in a keyboard.

Fig. 2 is a schematic section of the invention taken along lines 2-2 in Fig. 1.

Fig. 3 is a schematic, exploded view of Fig. 1 showing the placement of the optical sensing circuits.

Fig. 4 is a schematic view showing the relationship of the encoding markings to the optical sensing elements.

Fig. 5 is a chart of waveforms helpful in understanding the operation of the invention.

Fig. 6 is a high level schematic of the invention.

## DETAILED DESCRIPTION OF THE INVENTION

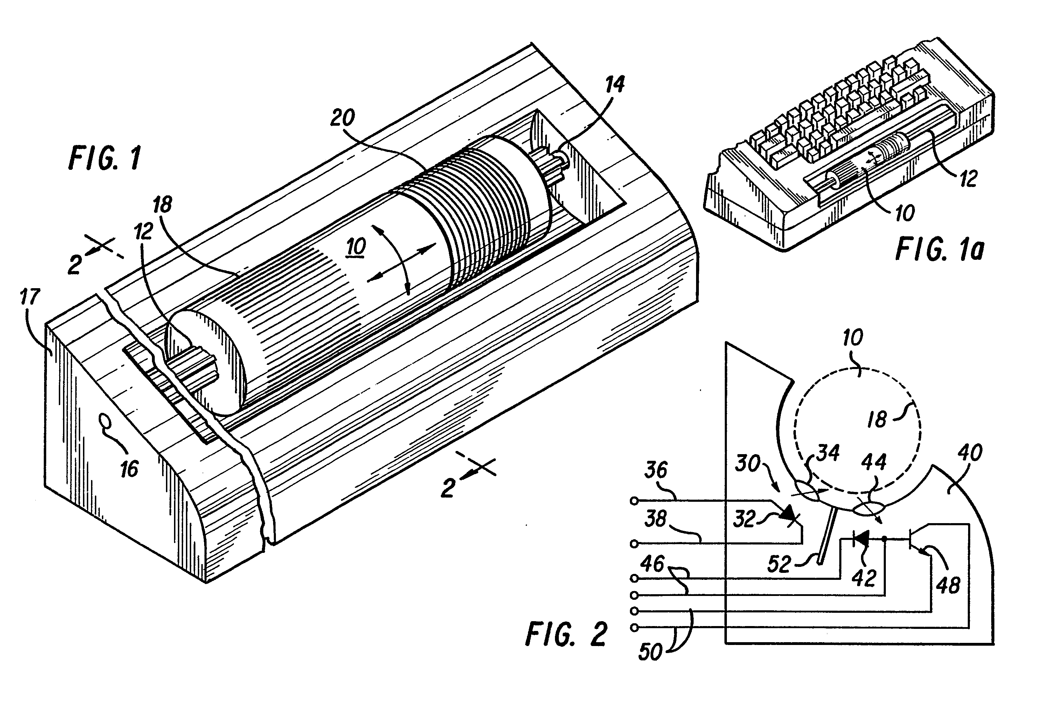

Referring now to Fig. 1, the cursor control mechanism comprises a cylindrical member 10 which is mounted on a splined shaft 12. Shaft 12 is mounted for rotary motion in journals 14 and 16 within housing 17. The splines on shaft 12 interact with grooves within cylindrical member 10 (not shown) and provide for the rotation thereof; while also providing member 10 with the ability to move longitudinally along the elongated axis of shaft 12.

A plurality of optically reflective markings 18 and 20 are provided on cylindrical member 10 and enable encoding circuitry to detect both rotary and longitudinal movement thereof. Markings 18 are parallel to the longitudinal center line of shaft 12 and provide an indication of rotary motion of member 10. Circular markings 20 are oriented orthogonally to the longitudinal axis of shaft 12 and provide indications of translational movement of member 10 along shaft 12.

As shown in Fig. 1a, the cursor control mechanism may be mounted in the frontal portion of a keyboard, preferably on the user side of the shift bar. In such case, the mechanism is located adjacent to the front face of the keyboard where it can be operated by the fingers, thumb or palm of a user's hand. When so operated, the cursor control mechanism permits the fingers of both hands to be substantially free to manipulate the keyboard keys.

While the position of cylindrical member 10 is shown in Fig. 1a as being integral to a terminals's keyboard, it may also be configured as a separate entity (e.g., as in Fig. 1) which sits immediately in front of the keyboard structure. Under these conditions, the mechanism abuts the front of the keyboard and has an upper surface whose slope approximately matches that of the keyboard to be ergonomically pleasing.

While not shown in Fig. 1, a pair of optical emitter/sensor assemblies are associated with each of markings 18 and 20. Referring to Fig. 2, a section along line 2-2 of Fig. 1 is shown which schematically illustrates one optical emitter/sensor assembly. Emitter 30 preferably comprises a light emitting diode 32 in combination with a focusing lens 34. Voltages to control light emitting diode 32 are applied via conductors 36 and 38. Sensor mechanism 40 comprises a photo receptor 42 (e.g., a silicon photo cell) in combination with a lens 44 which acts to focus reflected light from a marking 18 onto photo receptor 42. The bias voltage for photo receptor 42 is applied via lines 46 and its output occurs through transistor 48. The bias for transistor 48 is applied via conductors 50. Shield 52 is emplaced between light emitter 30 and photo receptor 40 to prevent any interaction therebetween other than that which results from light reflected from a marking 18.

In operation, light emitting diode 32 emits a beam of light which is focused by lens 34 on the periphery of cylindrical member 10. As the leading edge of reflective marking 18 causes the beam to be directed through lens 44 and onto photo receptor 42, the conductive state of receptor 42 increases thereby causing the base voltage of transistor 48 to fall. Concurrently, the collector voltage of transistor 48 rises, which rise is sensed across output conductors 50. When the lagging edge of marker 18 passes, the opposite effect occurs and the collector voltage of transistor 48 falls to indicate the passage of the marker from the incident beam.

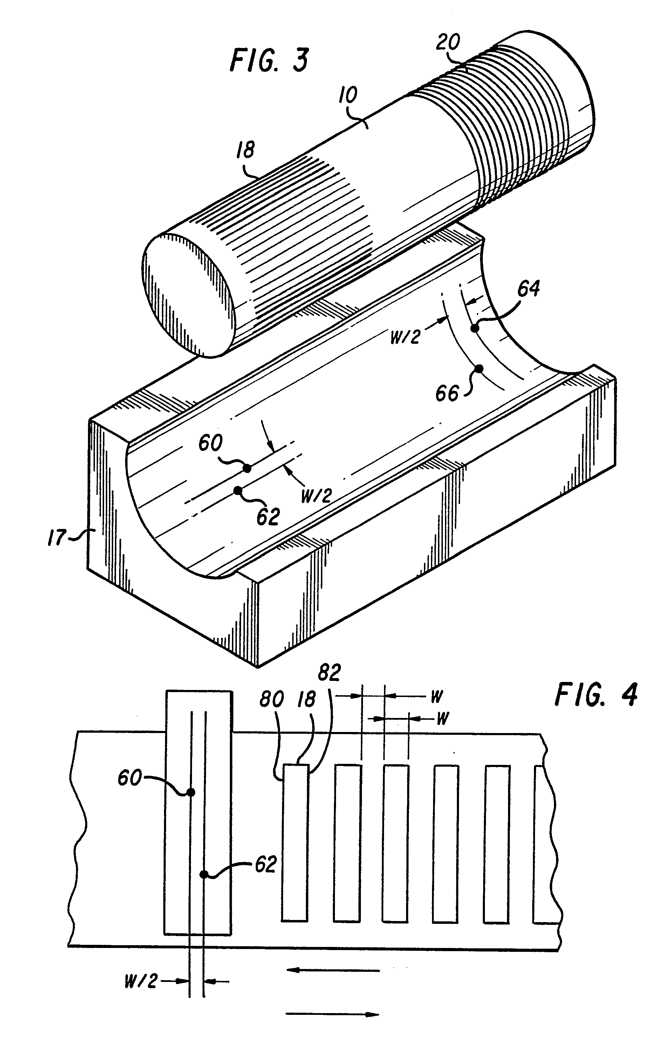

While the circuit of Fig. 2 is capable of providing signals which enable sensing of the speed of rotation or translation of cylindrical member 10, it is not capable of indicating the direction of such movements. The emitter/sensor arrangements shown in Figs. 3 and 4 provide direction indicating capability. As shown in Fig. 4, each of markings 18 are of width w and are separated from adjacent markings by a distance w. A pair of emitter/sensor assemblies 60 and 62 are provided in the path of markings 18. Emitter/sensor assembly 60, shown schematically in Fig. 4, comprises the structure shown in Fig. 2. An identical structure is present at the site indicated by 62 in Fig. 4. It is to be noted that emitter/sensor assemblies 60 and 62 are separated by a distance w/2 as measured in the direction of movement of markings 18.

In Fig. 3, cylindrical member 10 has been removed from base 17 to show the position of emitter/sensor assemblies 60 and 62 in relation to markings 18. A similar pair of emitter/sensor assemblies 64 and 66 are juxtaposed to circumferential markings 20 to provide outputs indicative of the longitudinal movement of cylindrical member 10.

Referring now to Fig. 5, the operation of emitter/sensor assemblies 60 and 62 will be described, it being realized that the operation of emitter/sensor assemblies 64 and 66 is identical. Waveforms 70, 72, 74, and 76 are plots of collector voltage outputs from each of the sensor elements 40 associated with emitter/sensor assemblies 60 and 62. Referring to Fig. 4, it can be seen that in the forward motion condition, as the leading edge 80 of marking 18 reaches emitter/sensor assembly 62, its output voltage rises in accordance with wave form 70. When leading edge 80 arrives at emitter/sensor assembly 60, its output similarly rises as shown by waveform 72. Similarly, for reverse motion, edge 82 of marking 18 will first be sensed by emitter/sensor assembly 60 causing output wave form 76 to be generated before emitter/sensor assembly 62 generates waveform 74. By determining which emitter/sensor output rises first, the direction of movement can be determined.

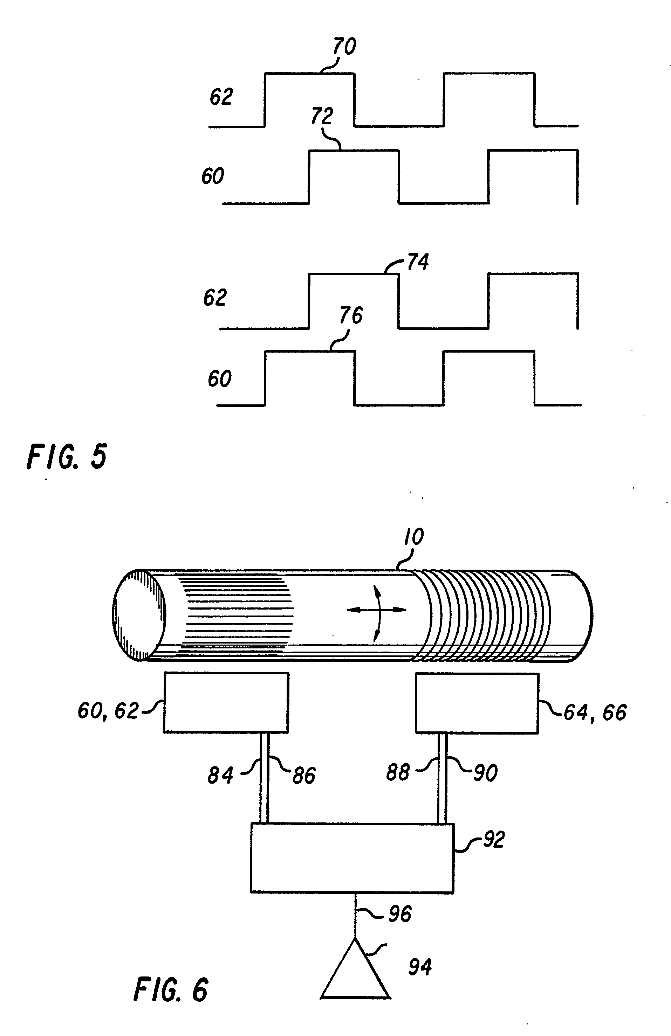

Waveforms 70, 72, 74 and 76 are respectively applied (see Fig. 6) via conductors 84, 86, 88 and 90 to microcomputer 92. Therein, a count is kept of the number of markings which pass by an emitter/sensor assembly, and the direction of rotation is determined via the aforementioned technique. Accordingly, microcomputer 92 is able to provide to display 94 via line 96, a pulsed output which enables the cursor on the face of display 94 to move in accordance with the rotational and translational movements of cylindrical member 10.

It should be noted that while the axial displacement between emitter/sensor assemblies is shown to be w/2, it is only necessary that the output from one sensor rise or fall, as the case may be, prior to a change in output of the other sensor. In this manner, the direction of movement of the stripe can be unambiguously determined.

It is to be understood that the above described embodiments of the invention are illustrative only and that modifications throughout may occur to those skilled in the art. Accordingly, this invention is not to be regarded as limited to the embodiments disclosed herein, but is to be limited as defined by the appended claims.

## Claims

1. A hand-controlled mechanism for producing signals to move the position of a cursor in a computer display, the mechanism comprising:
a shaft (12) having an elongated axis;
a cylindrical member (10) mounted coaxially around a portion of said shaft (12), said member being both rotatable about and slidable along said elongated axis, said cylindrical member (10) having sets of encoding markings (18,20) parallel to and transverse to said elongated axis;
optical means (60,62,64,66) responsive to the movement of said sets of encoding markings to sense both rotational and axial movement of said cylindrical member and to provide outputs indicative thereof;
decoder means (92) responsive to said outputs for producing signals to move the position of said display cursor.

2. A mechanism according to claim 1, wherein said optical means comprises:
light emitting/sensing means (32,42), at least a pair of emitting/sensing means associated with each said set of parallel and transverse encoding markings, at least a portion of each said set being reflective.

3. A mechanism according to claim 2, wherein said set of encoding markings (18) which is oriented parallel to said elongated axis is spaced around the periphery of said cylindrical member (10) as adjacent parallel lines.

4. A mechanism according to claim 3, wherein said set of transverse encoding markings (20) is emplaced about the periphery of said cylindrical member (10) as adjacent circles.

5. A mechanism according to claim 4, wherein each said encoding marking (18) has a discrete width and the associated pair of emitting/sensing means (60,62,64,66) are mounted apart in the direction of movement of said encoding marking by a distance less than said discrete width.

6. A mechanism according to claim 5, wherein said decoder means (92), by sensing which light emitting/sensing means of a pair produces an output indicative of the passage of a reflective portion of said set, before the other, detects the direction of movement of said cylindrical member (10).

7. A mechanism according to claim 6, wherein each said light emitting/sensing means (60,62,64,66) comprises a light emitting diode (32) and a light sensor (44), said light sensor responding to the light from said light emitting diode as reflected by an encoding marking.

8. A mechanism according to claim 7, wherein each said pair of light emitting/sensing means (60,62,64,66) is mounted apart by a distance equal to one half said discrete width of an encoding marking.

FIG. 1

FIG. 1a

FIG. 2

FIG. 3

20

10

18

64

W/2

66

60

W/2

62

17

FIG. 4

82

80 18

W

W

60

62

W/2

*70*

*62*

*72*

*60*

*74*

*62*

*76*

*60*

## FIG. 5

*10*

*60, 62*

*64, 66*

*84*  *86*  *88*  *90*

*92*

*96*

*94*

## FIG. 6